# EUROPEAN PATENT SPECIFICATION

(11) **EP 3 775 729 B1**
(45) Date of publication and mention of the grant of the patent: **07.09.2022**
(21) Application number: 19714590.7
(22) Date of filing: 26.03.2019
(51) Int. Cl.: F25D 23/12, A23G 9/12, A23G 9/22

(54) **A COOLER COMPRISING ICE-CREAM MAKING MACHINE**
KÜHLER MIT EINEM SPEISEEISBEREITER
REFROIDISSEUR COMPRENANT UNE MACHINE DE FABRICATION DE CRÈME GLACÉE

(30) Priority: 11.04.2018 TR 201805111
(43) Date of publication of application: 17.02.2021
(73) Proprietor: Arçelik Anonim Sirketi, 34445 Istanbul (TR)
(72) Inventor: KAYA, Metin, 34950 ISTANBUL (TR); KONUKSEVEN, Erhan Ilhan, 34950 ISTANBUL (TR); YENIGUN, Cagri, 34950 ISTANBUL (TR)
(86) International application number: PCT/EP2019/057598
(87) International publication number: WO 2019/197155

(56) References cited:
- WO-A1-2004/089103
- JP-A- H02 222 653
- US-A- 239 212
- US-A- 1 851 584
- US-A- 3 087 708

## Description

The present invention relates to a cooler comprising ice-cream making machine.

In coolers having freezer compartments enabling food products to be stored by being frozen, ice-cream making machines are placed said freezer compartments, enabling making ice-cream. In the state of the art, an ice-cream making machine placed in a freezer compartment, comprises a chamber in which ice-cream materials are placed, a mixer enabling mixing said materials, a motor and a transmission mechanism transmitting the movement of said motor to the mixer. The motion is transmitted by means of a shaft connecting the transmission mechanism and the mixer to each other. Positioning of the ice-cream making machine in a freezer compartment, particularly the positioning of the motor and the transmission mechanism with respect to each other, are of utmost importance in terms of effective operation of the ice-cream making machine and efficient utilization of the freezer compartment volume.

State of the art European patent no. EP3008410 discloses a cooler comprising an ice-cream making machine placed in a freezer compartment, having a cabinet, a chamber provided in the cabinet, in which ice-cream is prepared, a mixer provided in the chamber, a motor enabling the mixer to rotate by driving it and a transmission mechanism. In this document, the motor is disposed in front of the cold air blowing ducts in the freezer compartment, and the transmission mechanism is disposed below the chamber. Such positioning of the motor and the transmission mechanism increases the temperature of the air flowing around the chamber, and leads to not being able to mix the ice-cream mixture in the chamber at a desired cold temperature and not being able to freeze the mixture in a desired duration.

Another state of the art embodiment is the European patent application no. EP0105586. This document discloses a cooler comprising an ice-cream making machine having a housing bearing a motor and a transmission mechanism, and a sealing member extending between said housing and a wall.

Another state of the art document, the Turkish patent application no. TR201308318 discloses a cooler comprising an ice-cream making machine having a cabinet and a cover enabling the air in the cabinet to be partially discharged.

Further relevant prior art can be found in JPH02222653A.

The aim of the present invention is to realize a cooler comprising an ice-cream making machine having a chamber which can be easily attached to and detached from a freezer compartment volume.

The cooler realized to achieve the aim of the present invention and disclosed in the first claim and the dependent claims, comprises a trigger mechanism enabling a chamber to be removed from a freezer compartment by being detached from an ice-cream making machine, by a enabling user to easily disconnect a mixer from a shaft fixed to the transmission mechanism, enabling the connection and motion transmission between the mixer and the transmission mechanism. The trigger mechanism detachably connects the shaft and the mixer to each other, and by means of the trigger mechanism triggered by the user, the shaft is disconnected from the mixer, enabling the chamber to be easily removed from the freezer compartment.

When the ice-cream making machine placed in the freezer compartment is activated, the motion of the motor enables the mixer to be actuated and rotated by means of the transmission mechanism. In this state, the shaft and the mixer and interlocked. When a user wishes to remove the chamber from the ice-cream making machine, he/she detaches the shaft and the mixer by actuating the trigger mechanism on the chamber, enabling disconnecting the chamber from the shaft and therefore from the transmission mechanism and the motor connected thereto. By this, the chamber can be easily detached from the ice-cream making machine and removed from the freezer compartment.

The trigger mechanism is mounted on a cover provided on the chamber. The cover is adapted for the shape of the chamber's lip, and is preferably annular. The cover acts as a platform enabling positioning the trigger mechanism on the chamber.

The trigger mechanism comprises a pusher extending outwards from the cover and forming a protrusion on the cover periphery, and a first arm and a second arm movably connected to the other end of the pusher and to each other. The first and the second arms are "U" shaped, and when mounted so as to face each other, form a hollow rectangular frame with the mixer and the shaft resting in between.

In an embodiment of the invention, the trigger mechanism further comprises joints provided on the axis on which the first arm is connected to the pusher and the second arm, and on the axis on which the second arm is connected on the cover. In this embodiment of the invention, the first and the second joints move back and forth on horizontal plane and rotate about horizontal axis. The third joint only rotates about the axis on which it is disposed and does not move on horizontal axis.

In an embodiment of the invention, the ice-cream making machine comprises a preferably annular projection provided at the end of the shaft, resting on the second joint when the shaft and the mixer are interlocked, and a pin extending perpendicularly to the shaft, mounted on the projection. When the second joint abuts on the projection, it actuates upwards the projection and the pin and therefore the shaft fixed to them.

In an embodiment of the invention, the trigger mechanism further comprises a push spring extending on vertical axis and pushing the shaft towards the mixer, an end of which is fixed to the shaft and the other end to the projection.

In an embodiment of the invention, the trigger mechanism comprises a button mounted at the end of the pusher and a compression spring provided between the cover and the pusher, extending on horizontal axis. When a user pushes the button, the compression spring approaches the cover, moving the pusher. When the button is released, the button and the pusher resume their initial positions.

In an embodiment of the invention, the trigger mechanism comprises a protrusion shaped stopper delimiting the motion of the pusher on the cover in horizontal direction and preventing the pusher from sliding further on the cover and escaping therefrom.

In an embodiment of the invention, the ice-cream making machine comprises a handle provided on the chamber and aligned with the button, enabling a user to easily carry and move the chamber. The button and the handle being aligned enables the user to conveniently move the chamber while applying pressure on the button.

The cooler realized to achieve the aims of the present invention is illustrated in the accompanying drawings, wherein:
Figure 1 is a perspective view of a cooler.
Figure 2 is a frontal view of the ice-cream making machine.
Figure 3 is a perspective view of the ice-cream making machine from above.
Figure 4 is a perspective view of the ice-cream making machine with the housing, from above.
Figure 5 is a side view of the ice-cream making machine with the chamber mounted.
Figure 6 is a side view of the ice-cream making machine when the button is pressed.

The elements in the figures are numbered individually and the correspondence of these numbers are given hereinafter.
- 1.: Cooler
- 2.: Freezer compartment
- 3.: Ice-cream making machine
- 4.: Chamber
- 5.: Mixer
- 6.: Motor
- 7.: Transmission mechanism
- 8.: Shaft
- 9.: Trigger mechanism
- 10.: Cover
- 11.: Pusher
- 12.: First arm
- 13.: Second arm
- 14.: First joint
- 15.: Second joint
- 16.: Third joint
- 17.: Button
- 18.: Push spring
- 19.: Compression spring
- 20.: Projection
- 21.: Stopper
- 22.: Housing
- 23.: Slit
- 24.: Handle
- 25.: Pin

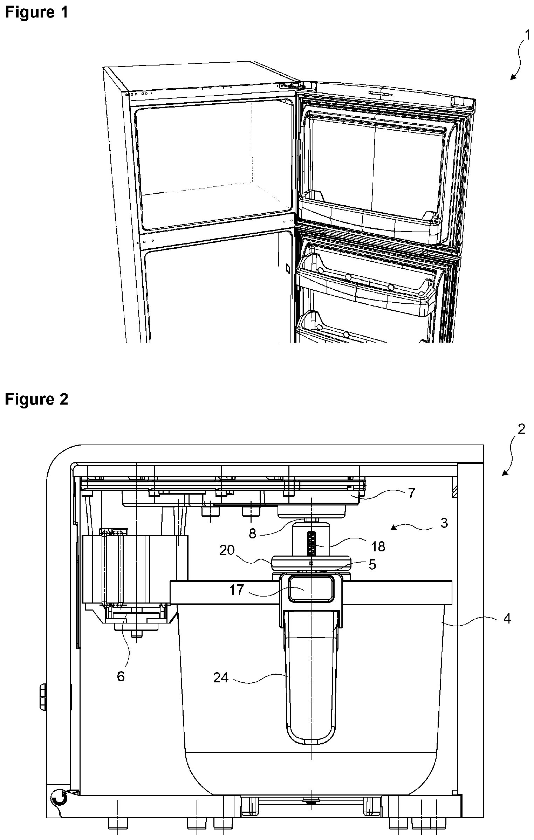

The cooler (1) has at least one freezer compartment (2) in which items/food products to be frozen are placed, and further comprises at least one ice-cream making machine (3) placed in the freezer compartment (2), having a chamber (4) in which ice-cream materials are placed and ice-cream is prepared, at least one mixer (5) extending towards into the chamber (4), enabling mixing the materials in the chamber (4), a motor (6), a transmission mechanism (7) transmitting the movement of the motor (6) to the mixer (5), and a shaft (8) provided at the end of the transmission mechanism (7), enabling the mixer (5) mounted thereon to rotate in vertical axis by transmitting the movement received from the transmission mechanism (7) in the perpendicular direction, and a trigger mechanism (9) mounted on the ice-cream making machine (3), enabling the chamber (4) to be removed from the ice-cream making machine (3) upon a user disconnecting the shaft (8) from the mixer (5) (Figure 1 and Figure 2).

When the ice-cream (3) machine placed in the freezer compartment (2) is activated, the motor (6) starts operating and the motion of the motor (6) enables by means of the transmission mechanism (7) actuating and rotating the mixer (5) extending into the chamber (4) and enabling mixing the materials in the chamber (4). In this state, the shaft (8) and the mixer (5) and interlocked. When a user wishes to remove the chamber (4) from the ice-cream making machine (3), he/she detaches the shaft (8) and the mixer (5) by actuating the trigger mechanism (9) on the chamber (4), enabling disconnecting the chamber (4) from the shaft (8) and from the transmission mechanism (7) and the motor (6) connected thereto. By this, the chamber (4) can be easily detached from the ice-cream making machine (3) and removed from the freezer compartment (2).

The trigger mechanism (9) comprises a cover (10) provided on the chamber (4). The trigger mechanism (9) is mounted on said cover (10). The cover (10) is adapted for the shape of the chamber's (4) lip, and is preferably annular.

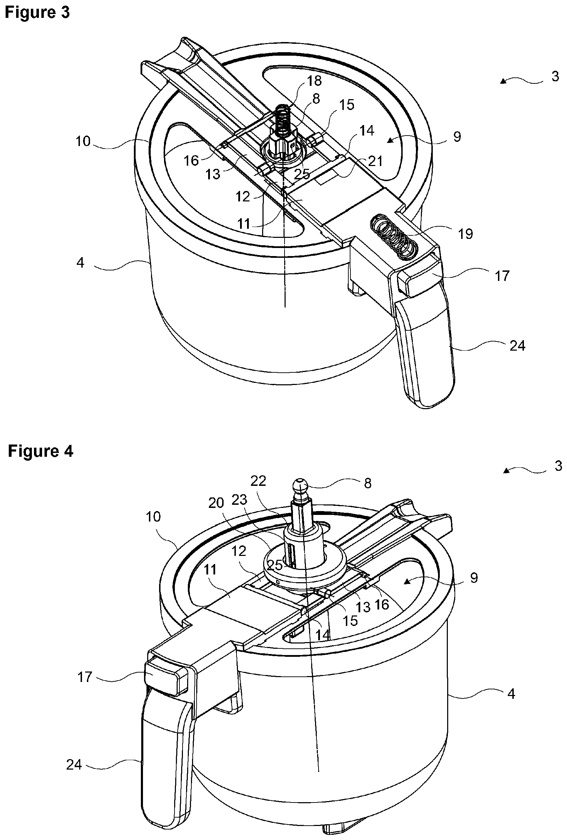

The trigger mechanism (9) comprises a pusher (11) whose one end extends outwards from the cover (10) and forms a projection on the periphery of the cover (10) in horizontal plane, a first arm (12) movably connected to the other end of the pusher (11), and a second arm (13) also movably connected to the end of the first arm (12), whose other end is movably mounted on the cover (10). The first and the second arms (12 and 13) are "U" shaped, and form a hollow rectangular frame when mounted to each other. The mixer (5) and the shaft (8) are disposed between the first and the second arms (12 and 13) (Figure 3).

In an embodiment of the invention, the trigger mechanism (9) further comprises a first joint (14) extending on the axis on which the first arm (12) is movably connected to the pusher (11), a second joint (15) provided in parallel to the first joint (14) on the axis on which the first arm (12) and the second arm (13) are movably connected to each other, and a third joint (16) disposed parallel to the first and the second joints (14 and 15), by means of which the second joint (15) is mounted on the cover (10). In this embodiment of the invention, the first and the second joints (14 and 15) move back and forth on horizontal plane and rotate about horizontal axis. The third joint (16) only rotates about the axis on which it is disposed and does not move on horizontal axis.

In an embodiment of the invention, the ice-cream making machine (3) comprises a preferably annular projection (20) provided at the end of the shaft (8), which rests perpendicular to the shaft (8) axis and parallel to the cover (10). The projection (20) rests on the second joint (15) when the shaft (8) and the mixer (5) are interlocked. In this embodiment of the invention, the ice-cream making machine (3) comprises a pin (25) extending perpendicularly to the shaft (8) and mounted on the projection (20).

In an embodiment of the invention, the trigger mechanism (9) further comprises a push spring (18) extending on vertical axis and pushing the shaft (8) towards the mixer (5), an end of which is connected to the shaft (8) and the other end to the projection (20).

In an embodiment of the invention, the trigger mechanism (9) comprises a button (17) mounted at the portion of the pusher (11) extending beyond the cover (10) and a compression spring (19) provided between the cover (10) and the pusher (11), extending on horizontal axis. When a user pushes the button (17), the compression spring (19) approaches the cover (10), moving the pusher (11). When the button (17) is released, the button (17) and the pusher (11) resume their initial positions.

In an embodiment of the invention, the trigger mechanism (9) comprises a protrusion shaped stopper (21) delimiting the motion of the pusher (11) on the cover (10) in horizontal direction and preventing the pusher (11) from sliding further on the cover (10) and escaping therefrom.

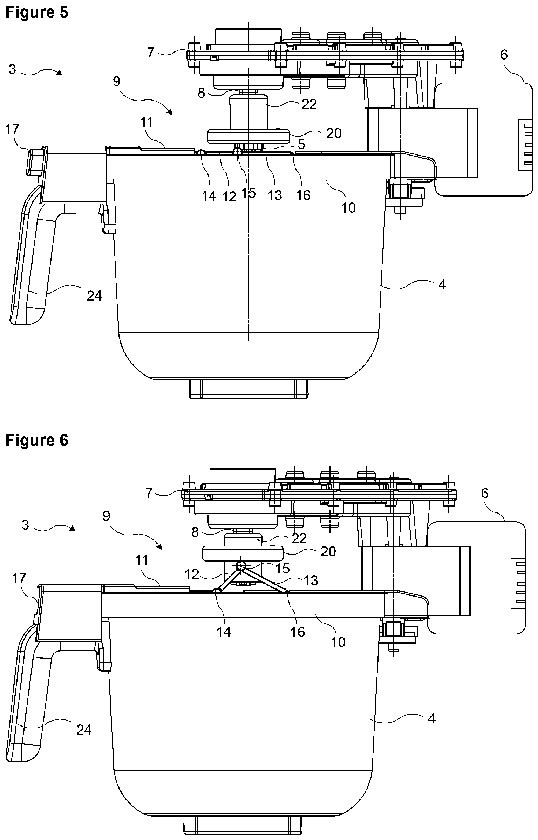

In an embodiment of the invention, when the chamber (4) is mounted on the ice-cream making machine (3) with the button (17) not triggered, the push spring (18) pushes the shaft (8) against the mixer (5) and the projection (20) on the shaft (8) is disposed on the second joint (15) connecting the first and the second arms (12 and 13) extending on the cover (10) in horizontal direction. In this state, the compression spring (19) between the pusher (11) and the cover (10) pushes the button (17) outwards from the periphery of the cover (10) (Figure 5). A user pushes the button (17) when he/she wishes to detach the chamber (4) from the ice-cream making machine (3). When the button (17) is depressed, it compresses the compression spring (19) against the cover (10) and this compression causes the pusher (11) to move in direction of the force applied on the button (17). During this motion, while the first joint (14) slides so as to move away from the button (17), it also rotates and its end connecting the first arm (12) to the second arm (13) moves upwards in vertical direction. The second arm (13) connected to the first arm (12) also moves during this motion, and moves upwards in vertical direction together with the second joint (15) disposed between the first arm (12) and the second arm (13), and the third arm (16) by means of which the second arm (13) is mounted on the cover (10), pivots about its mounting axis. During the motion in vertical direction of the first and the second arm (12 and 13) and of the second joint (15) through which the first and the second arm (12 and 13) are movably connected to each other, the projection (20) on the second joint (15) also moves upwards, pushing along with it the push spring (18) which in turn moves upwards the shaft (8) interlocked to the mixer (5), enabling disconnecting the shaft (8) and the mixer (5) (Figure 6). In this state, the user is enabled to detach the chamber (4) from the ice-cream making machine (3). Meanwhile, when the force applied on the push spring (18) is released, the push spring (18) resumes its initial position and the shaft (8) moves downwards in vertical direction, resuming its initial position. When the user releases pressure from the button (17), the compression spring (19) resumes its initial position, enabling the pusher (11), and the first and the second arms (12 and 13) to resume their initial positions. In this state, the pusher (11) engages the stopper (21) on the cover (10), completing movement of the trigger mechanism (9).

In an embodiment of the invention, the ice-cream making machine (3) comprises a housing (22) enclosing the shaft (8), push spring (18) and the pin (25), and protecting them from external elements. In this embodiment of the invention, the ice-cream making machine (3) further comprises two slits (23) provided on opposite sides of the housing (22) wall, enabling the pin (25) to move in vertical direction thereon (Figure 4).

In an embodiment of the invention, the ice-cream making machine (3) comprises a handle (24) provided on the chamber (4) and aligned with the button (17), enabling a user to easily carry and move the chamber (4).

## Claims

1. A cooler (1) **comprising** at least one freezer compartment (2) in which items/food products to be frozen are placed, and at least one ice-cream making machine (3) placed in the freezer compartment (2), having a chamber (4) in which ice-cream materials are placed and ice-cream is prepared, at least one mixer (5) extending towards into the chamber (4), enabling mixing the materials in the chamber (4), a motor (6), a transmission mechanism (7) transmitting the movement of the motor (6) to the mixer (5), and a shaft (8) provided at the end of the transmission mechanism (7), enabling the mixer (5) mounted thereon to rotate in vertical axis by transmitting the movement received from the transmission mechanism (7) in the perpendicular direction, a trigger mechanism (9) mounted on the ice-cream making machine (3), enabling the chamber (4) to be removed from the ice-cream making machine (3) upon a user disconnecting the shaft (8) from the mixer (5) **characterized by** the trigger mechanism (9) comprising a cover (10) provided on the chamber (4), the trigger mechanism (9) comprising a pusher (11) whose one end extends outwards from the cover (10) and forms a projection on the periphery of the cover (10) in horizontal plane, a first arm (12) movably connected to the other end of the pusher (11), and a second arm (13) also movably connected to the end of the first arm (12), whose other end is movably mounted on the cover (10), the first arm and the second arms (12, 13) are "U" shaped, and when mounted so as to face each other, form a hollow rectangular frame with the mixer and the shaft resting in between.

2. A cooler (1) according to claim 1, **characterized by** the trigger
mechanism (9) comprising a first joint (14) extending on the axis on which the first arm (12) is movably connected to the pusher (11), a second joint (15) provided in parallel to the first joint (14) on the axis on which the first arm (12) and the second arm (13) are movably connected to each other, and a third joint (16) by means of which the second joint (15) is mounted on the cover (10), disposed parallel to the first and the second joints.

3. A cooler (1) according to claim 2, **characterized by** the first and the second joints (14
and 15) moving back and forth on horizontal plane and rotating about horizontal axis.

4. A cooler (1) according to claim 2 or 3, **characterized by** the third joint (16) pivoting about
its own axis.

5. A cooler (1) according to claim 1, **characterized by** the ice-cream making machine (3)
comprising a projection (20) provided at the end of the shaft (8), which rests perpendicular to the shaft (8) axis and parallel to the cover (10).

6. A cooler (1) according to claim 2 and claim 5, **characterized by** the projection (20)
resting on the second joint (15) when the shaft (8) and the mixer (5) are interlocked.

7. A cooler (1) according to claim 5 or 6, **characterized by** the ice-cream making machine
(3) comprising a pin (25) extending perpendicularly to the shaft (8) and mounted to the projection (20).

8. A cooler (1) according to claim 7, **characterized by** the trigger mechanism (9)
comprising a push spring (18) extending on vertical axis, an end of which is fixed to the shaft (8) and the other end to the projection (20), pushing the shaft (8) towards the mixer (5).

9. A cooler (1) according to claim 1, **characterized by** the trigger mechanism (9)
comprising a button (17) mounted at the portion of the pusher (11) extending beyond the cover (10) and a compression spring (19) provided between the cover (10) and the pusher (11), extending on horizontal axis.

10. A cooler (1) according to claim 1, **characterized by** the trigger mechanism (9)
comprising a stopper (21) delimiting the motion of the pusher (11) on the cover (10) in horizontal direction and preventing the pusher (11) from sliding further on the cover (10) and escaping therefrom.

11. A cooler (1) according to claim 8, **characterized by** the ice-cream making machine (3)
comprising a housing (22) enclosing the shaft (8), push spring (18) and the pin (25) and protecting them from external elements.

12. A cooler (1) according to claim 11, **characterized by** the ice-cream making machine (3)
comprising two slits (23) provided on opposite sides of the housing (22) wall, enabling the pin (25) to move thereon in vertical direction thereon.

## Patentansprüche

1. Ein Kühler (1) umfasst mindestens ein Gefrierfach (2), in dem einzufrierende Gegenstände/Lebensmittel platziert werden, und mindestens eine Eiscrememaschine (3), die in dem Gefrierfach (2) angeordnet ist und eine Kammer (4) aufweist, in der Eiscreme-Materialien platziert werden und Eiscreme zubereitet wird, mindestens einen Mixer (5), der sich in die Kammer (4) hinein erstreckt und das Vermischen der Materialien in der Kammer (4) ermöglicht, einen Motor (6), einen Übertragungsmechanismus (7), der die Bewegung des Motors (6) auf den Mixer (5) überträgt, und eine am Ende des Übertragungsmechanismus (7) vorgesehene Schaft (8), die den Mischer ( 5) daran montiert, um sich um eine vertikale Achse zu drehen, indem die vom Übertragungsmechanismus (7) empfangene Bewegung in der senkrechten Richtung übertragen wird, einen Auslösemechanismus (9), der an der Eiscrememaschine (3) montiert ist und ermöglicht, dass die Kammer (4) von der Eiscrememaschine (3) entfernt wird, wenn ein Benutzer den Schaft (8) von dem Mixer (5) trennt, **gekennzeichnet ist er durch** den Auslösemechanismus (9), der eine an der Kammer (4) vorgesehene Abdeckung (10) umfasst, wobei der Auslösemechanismus (9) einen Drücker (11) aufweist, dessen eines Ende sich von der Abdeckung (10) nach außen erstreckt und einen Vorsprung am Umfang der Abdeckung (10) in horizontaler Ebene bildet, einen ersten Arm (12), der beweglich mit dem anderen Ende des Drückers (11) verbunden ist, und einen zweiten Arm (13), der ebenfalls beweglich mit dem Ende des ersten Arms (12) verbunden ist und dessen anderes Ende beweglich an der Abdeckung (10) montiert ist, wobei der erste Arm und der zweite Arm (12, 13) "U"-förmig sind und dass wenn sie so montiert sind, dass sie einander zugewandt sind, dass sie einen hohlen rechteckigen Rahmen, zwischen dem der Mixer und dem Schaft bilden.

2. Ein Kühler (1), wie in Anspruch 1 aufgeführt, **ist dadurch gekennzeichnet, dass** der Auslösemechanismus (9) ein erstes Gelenk (14) umfasst, der sich auf der Achse erstreckt, auf der der erste Arm (12) beweglich mit dem Drücker (11) verbunden ist, ein zweites Gelenk (15), das parallel zum ersten Gelenk (14) auf der Achse vorgesehen ist, auf der der erste Arm (12) und der zweite Arm (13) beweglich miteinander verbunden sind, und ein drittes Gelenk (16), mit dem das zweite Gelenk (15) an der Abdeckung (10) gelagert ist, das parallel zu dem ersten und dem zweiten Gelenk angeordnet ist.

3. Ein Kühler (1), wie in Anspruch 2 aufgeführt, **ist dadurch gekennzeichnet, dass** sich das erste und das zweite Gelenk (14 und 15) auf einer horizontalen Ebene hin und her bewegen und sich um eine horizontale Achse drehen.

4. Ein Kühler (1), wie in Anspruch 2 oder 3 aufgeführt, **ist dadurch gekennzeichnet, dass** das dritte Gelenk (16) um seine eigene Achse schwenkt.

5. Ein Kühler (1), wie in Anspruch 1 aufgeführt, **ist dadurch gekennzeichnet, dass** die Eiscrememaschine (3) einen am Ende der Schaft (8) vorgesehenen Vorsprung (20) aufweist, der senkrecht zur Achse der Schaft (8) und parallel zur Abdeckung (10) ruht.

6. Ein Kühler (1), wie in Anspruch 2 und 5 aufgeführt, **ist dadurch gekennzeichnet, dass** der Vorsprung (20) auf dem zweiten Gelenk (15) aufliegt, wenn der Schaft (8) und der Mixer (5) miteinander verriegelt sind.

7. Ein Kühler (1), wie in Anspruch 5 oder 6 aufgeführt, **ist dadurch gekennzeichnet, dass** die Eiscrememaschine (3) einen Stift (25) umfasst, der sich senkrecht zu dem Schaft (8) erstreckt und an dem Vorsprung (20) angebracht ist.

8. Ein Kühler (1), wie in Anspruch 7 aufgeführt, **ist dadurch gekennzeichnet, dass** der Auslösemechanismus (9) eine Druckfeder (18) umfasst, die sich auf einer vertikalen Achse erstreckt, von der ein Ende an dem Schaft (8) und das andere Ende an dem Vorsprung (20) befestigt ist, wodurch der Schaft (8) in Richtung des Mixers (5) gedrückt wird.

9. Ein Kühler (1), wie in Anspruch 1 aufgeführt, **ist dadurch gekennzeichnet, dass** der Auslösemechanismus (9) einen Knopf (17) umfasst, der an dem Abschnitt des Drückers (11) angebracht ist, der sich über die Abdeckung (10) hinaus erstreckt und eine Kompressionsfeder (19), die zwischen der Abdeckung (10) und dem Drücker (11) vorgesehen ist und sich auf einer horizontalen Achse erstreckt.

10. Ein Kühler (1), wie in Anspruch 1 aufgeführt, **ist dadurch gekennzeichnet, dass** der Auslösemechanismus (9) einen Stopper (21) umfasst, der die Bewegung des Drückers (11) auf der Abdeckung (10) in horizontaler Richtung begrenzt und verhindert, dass der Drücker (11) weiter auf der Abdeckung (10) gleitet und daraus entweicht.

11. Ein Kühler (1), wie in Anspruch 8 aufgeführt, **ist dadurch gekennzeichnet, dass** die Eiscrememaschine (3) ein Gehäuse (22) umfasst, dass der Schaft (8), die Druckfeder (18) und den Stift (25) umschließt und sie vor äußeren Elementen schützt.

12. Ein Kühler (1), wie in Anspruch 11 aufgeführt, **ist dadurch gekennzeichnet, dass** die Eiscrememaschine (3) zwei Schlitze (23) umfasst, die an gegenüberliegenden Seiten der Wand des Gehäuses (22) vorgesehen sind, wodurch sich der Stift (25) darauf in vertikaler Richtung darauf bewegen kann.

## Revendications

1. Un réfrigérateur (1) comprenant au moins un compartiment congélateur (2) dans lequel se placent les articles/les produits alimentaires à congeler, et au moins une machine à crèmes glacées (3) placée dans le compartiment congélateur (2), ayant une chambre (4) dans laquelle se placent les matériels pour la crème glacée et où se prépare la crème glacée, au moins un mélangeur (5) se prolongeant vers l'intérieur de la chambre (4), permettant de mélanger les matériels dans la chambre (4), un moteur (6), un mécanisme de transmission (7) transmettant le mouvement du moteur (6) au mélangeur (5), et un arbre (8) prévu à l'extrémité du mécanisme de transmission (7), permettant au mélangeur (5) monté sur celui-ci de tourner dans un axe vertical, en transmettant le mouvement reçu du mécanisme de transmission (7) dans la direction perpendiculaire, un mécanisme de déclenchement (9) monté sur la machine à crèmes glacées (3), permettant de retirer la chambre (4) de la machine à crèmes glacées (3) lorsqu'un utilisateur déconnecte l'arbre (8) du mélangeur (5) **caractérisé par** le mécanisme de déclenchement (9) comprenant un couvercle (10) prévu sur la chambre (4), le mécanisme de déclenchement (9) comprenant un poussoir (11) dont une extrémité se prolonge vers l'extérieur du couvercle (10) et forme une saillie sur la périphérie du couvercle (10) dans un plan horizontal, un premier bras (12) connecté de manière mobile à l'autre extrémité du poussoir (11), et un deuxième bras (13) également connecté de manière mobile à l'extrémité du premier bras (12), dont l'autre extrémité est montée de manière mobile sur le couvercle (10), le premier bras et le deuxième bras (12, 13) sont en forme de "U", et lorsqu'ils sont montés de manière à se faire face, forment un cadre rectangulaire creux avec le mélangeur et l'arbre reposant entre les deux.

2. Un réfrigérateur (1) selon la revendication 1, **caractérisé par** le mécanisme de déclenchement (9) comprenant une première articulation (14) s'étendant sur l'axe sur lequel le premier bras (12) est connecté de manière mobile au poussoir (11), une deuxième articulation (15) prévue parallèlement à la première articulation (14) sur l'axe sur lequel le premier bras (12) et le deuxième bras (13) sont connectés de manière mobile l'un à l'autre, et une troisième articulation (16) au moyen de laquelle la seconde articulation (15) est montée sur le couvercle (10), disposée parallèlement à la première et la seconde articulation.

3. Un réfrigérateur (1) selon la revendication 2, **caractérisé par** la première et la deuxième articulation (14 et 15) se déplaçant par des mouvements de va-et-vient sur un plan horizontal et tournant autour d'un axe horizontal.

4. Un réfrigérateur (1) selon la revendication 2 ou 3, **caractérisé par** la troisième articulation (16) pivotant autour de son propre axe.

5. Un réfrigérateur (1) selon la revendication 1, **caractérisé par** la machine à crèmes glacées (3) comprenant une saillie (20) prévue à l'extrémité de l'arbre (8), qui reste perpendiculaire à l'axe de l'arbre (8) et parallèle au couvercle (10).

6. Un réfrigérateur (1) selon la revendication 2 et la revendication 5, **caractérisé par** la saillie (20) restant sur la deuxième articulation (15) lorsque l'arbre (8) et le mélangeur (5) s'imbriquent.

7. Un réfrigérateur (1) selon la revendication 5 ou 6, **caractérisé par** la machine à crèmes glacées (3) comprenant une broche (25) s'étendant perpendiculairement à l'arbre (8) et montée sur la saillie (20).

8. Un réfrigérateur (1) selon la revendication 7, **caractérisé par** le mécanisme de déclenchement (9) comprenant un ressort de poussée (18) se prolongeant sur un axe vertical, dont une extrémité est fixée à l'arbre (8) et l'autre extrémité à la saillie (20), poussant l'arbre (8) vers le mélangeur (5).

9. Un réfrigérateur (1) selon la revendication 1, **caractérisé par** le mécanisme de déclenchement (9) comprenant un bouton (17) monté au niveau de la partie du poussoir (11) qui dépasse du couvercle (10) et un ressort de compression (19) prévu entre le couvercle (10) et le poussoir (11), se prolongeant sur un axe horizontal.

10. Un réfrigérateur (1) selon la revendication 1, **caractérisé par** le mécanisme de déclenchement (9) comprenant une butée (21) délimitant le mouvement du poussoir (11) sur le couvercle (10) en direction horizontale et empêchant le poussoir (11) de glisser davantage sur le couvercle (10) et de s'échapper de celui-ci.

11. Un réfrigérateur (1) selon la revendication 8, **caractérisé par** la machine à crèmes glacées (3) comprenant un boîtier (22) renfermant l'arbre (8), le ressort de poussée (18) et la broche (25), et les protégeant des éléments externes.

12. Un réfrigérateur (1) selon la revendication 11, **caractérisé par** la machine à crèmes glacées (3) comprenant deux fentes (23) prévues sur les côtés opposés de la paroi du boîtier (22), permettant à la broche (25) de se déplacer dessus dans le sens vertical.
